# EUROPEAN PATENT SPECIFICATION

(11) **EP 3 892 778 B1**
(45) Date of publication and mention of the grant of the patent: **07.12.2022**
(21) Application number: 19893856.5
(22) Date of filing: 28.11.2019
(51) Int. Cl.: E02D 13/06, G01B 11/02

(54) **OPTICAL DEVICE FOR THE VERIFICATION OF PILE-DRIVING**
OPTISCHE VORRICHTUNG ZUR ÜBERPRÜFUNG VON RAMMARBEITEN
DISPOSITIF OPTIQUE DE VÉRIFICATION D'ENFONCEMENT D'UN PIEU

(30) Priority: 03.12.2018 ES 201831172
(43) Date of publication of application: 13.10.2021
(73) Proprietor: Universidad Politécnica De Madrid, 28040 Madrid (ES)
(72) Inventor: ESCOLANO SÁNCHEZ, Félix, 28040 Madrid (ES); MAS LÓPEZ, María Isabel, 28040 Madrid (ES); MAZARIEGOS DE LA SERNA, Alberto, 28040 Madrid (ES); SÁNCHEZ LAVIN, José Ramón, 28040 Madrid (ES)
(74) Representative: Elzaburu S.L.P.
(86) International application number: PCT/ES2019/070813
(87) International publication number: WO 2020/115345

(56) References cited:
- WO-A1-2018/157015
- JP-A- H01 307 616
- JP-A- 2012 219 556
- US-A1- 2009 207 421
- US-B1- 7 782 604

## Description

### Object of the invention

The present invention relates to an optical device for the verification of driving in piles, especially precast piles. It is a digital device which, by means of the consecutive capturing of images of a pile, tracks the pile-driving process, until it is verified that certain conditions occur wherein the driving process can be terminated.

The optical device for the verification of pile-driving object of the invention has application in the field of the infrastructure construction industry, as well as in the field of the industry dedicated to the design, manufacture and commercial exploitation of digital metrology devices.

### Technical problem to be solved and Background of the invention

At present there are several existing techniques for performing the verification of precast pile-driving at construction sites. Among them, the ones mentioned below can be highlighted.

### Rejection Measurement:

This measurement is defined, in Spain, in the 2006 Technical Building Code (CTE-2006). The "REJECTION" (penetration every 10 strikes) is measured in order to control that the load capacity that the pile must withstand has been reached.

### Static load tests:

This test is defined by the American Society for Testing and Materials (ASTM) under standard ASTMD1143. In tests of this type and with the help of other piles or anchors as a reaction, the pile is subjected to loads greater than the maximum service, observing the behaviour thereof and obtaining the loadseating curve.

### Pile-Driving Analyser (PDA):

This is a dynamic load test. This test enables, in a non-destructive manner, both the conditions of the terrain and the development of the driving to be analysed, controlling the integrity of the pile and the load capacity thereof differentiated into shaft and tip. It is referenced in numerous Spanish regulations (ROM-0.5-05, UNE - EN 12699, Technical Building Code: Basic Document SE-C-2006, Foundations Guide of the Ministry of Public Works and Transport, etc.), and international regulations (ASTMD-4945, Eurocodes).

### Pile Integrity Test (PIT):

This test is defined in standard ASTMD5882. It is used to specifically control the integrity of piles. It is also based on the theory of shock wave propagation through the same, measuring reductions or increases in the cross section of the pile. This test is also included in the regulations cited in the previous point of the PDA.

The current systems, such as those mentioned above, make it possible to determine with sufficient reliability at the site the moment starting from which the driving of a precast pile is considered acceptable (reaching the load capacity thereof).

However, such systems are expensive and require the tested pile to come prepared from the manufacturing plant with the necessary instrumentation for the auscultation thereof at the site itself during the driving thereof. This limits the frequency of performing tests and, depending on the terrain crossed through and the required load capacity, may pose a risk, either of leaving piles insufficiently driven into the terrain or, on the contrary, of overexposing the element to excessive striking with the possible deterioration of the material or inclination of the element.

The patent document WO 2018/157015A1 discloses relevant prior art regarding the present invention. In particular it discloses a non-contact strain and/or displacement measurement system for use with structural objects having an optical device, a data store and an image arrangement that is fixed relative to the structural object to be tested, the optical device including an image receiving device for receiving visual images and the data store being configured to record the received visual images, the image receiving device being spaced from the image arrangement by an optical spacing such that the image receiving device has a visual range that includes a portion of the structural object and the image arrangement being within the portion, the image arrangement having at least one image element wherein movement of the at least one image element during a measurement period provides image data to calculate structural object strain and/or structural object displacement.

### Description of the invention

The present invention relates to an optical device for the verification of pile-driving.

The present invention also relates to a method for the optical verification of pile-driving.

By means of the device and the method of the present invention, it is possible to provide a solution to the problems mentioned in the previous section.

The optical device for the verification of pile-driving incorporates:
- a supporting structure, comprising an inertial system configured to eliminate and/or correct movements of the terrain due to the driving process of the pile, where the supporting structure comprises:
   ∘ a camera, configured to capture images of the surface of the pile;
   ∘ an articulated arm (and preferably also extendable and/or telescopic), which in turn comprises a point of reference;
   ∘ a sensor-illuminator, configured to illuminate the surface of the pile and the point of reference by means of a laser illumination pattern, likewise to measure:
      ▪ a distance from said sensor-illuminator to a contrast strip fastened to the surface of the pile, and;
      ▪ a distance from the sensor-illuminator to the projection of the point of reference illuminated by the laser light on the surface of the pile;
- equipment for the processing of the images captured by the camera and of the distances measured by the sensor-illuminator; and
- a monitor, configured to display the processed images, captured by the camera, containing the information about the distances measured by the sensor-illuminator;
where the processing equipment is configured so as to measure, on each image captured by the camera, a distance between the contrast strip and the point of reference and (by means of triangulation or changing scales) to calculate the actual distance on the pile between the contrast strip and the projection of the point of reference on the surface of the pile.

Preferably, the device of the invention includes a driving completion warning system, configured to emit a signal identifying the completion of the driving process of the pile. Preferably, the warning system is configured to emit an acoustic and/or visual signal.

According to a preferred embodiment, the processing equipment is configured to produce two types of images by means of the combination of the images captured by the camera and the distances measured by the sensor-illuminator, namely:
- intensity images, where each intensity image contains an image of the pile, and wherein each intensity image has associated information in three fields, X, Y, Z, where:
   ∘ the field X has an associated horizontal distance from the sensor-illuminator to the pile;
   ∘ the field Y has an associated vertical distance, that is the distance between the contrast strip and the point of reference, from each point corresponding to the contrast strip to the point of reference, and;
   ∘ the field Z has an associated intensity level, in grey scale, where the contrast strip and the point of reference comprise a light reflection spectrum different from the rest of the illuminated surface of the pile, which enables the contrast strip and the point of reference of the rest of the illuminated surface of the pile to be distinguished in the image;
- range images, where each range image contains an image of the pile, and wherein each range image has associated information in three fields, X, Y, Z, where:
   ∘ the field X has an associated horizontal distance from the sensor-illuminator to the pile;
   ∘ the field Y has an associated vertical distance, corresponding to the actual distance on the pile between the contrast strip and the projection of the point of reference on the surface of the pile (this actual distance is obtained by trigonometry and/or by changing scales, starting from the values of the distance between the contrast strip and the point of reference on each image, the distance from the sensor-illuminator to the projection of the point of reference illuminated by the laser light on the surface of the pile and the distance from the sensor-illuminator to the contrast strip fastened to the surface of the pile), and;
   ∘ the field Z has the associated distance from the sensor-illuminator to the contrast strip.

The measurement of distances by the sensor-illuminator requires, preferably, that the articulated arm (preferably telescopic), which positions the point of reference in front of the camera, be in a horizontal position, for which it is necessary to level it before performing the test (before the start of capturing measurements and images).

The value of "X" in the range images and in the intensity images can directly coincide with the value of the distance from the sensor-illuminator to the projection of the point of reference illuminated by the laser light on the surface of the pile measured by the sensor-illuminator, as long as the sensor-illuminator and the point of reference (located on the articulated arm) are positioned in the same horizontal plane. The sensor-illuminator determines the distance "X" for each of the images in the sequence of images captured by the camera, in other words, with each pulse which actuates the camera.

Preferably, the illumination pattern emitted by the sensor-illuminator is a vertical line which passes through the contrast strip and through the point of reference.

The processing equipment is preferably installed on a rack which is damped and stabilised against possible vibrations of the terrain.

The device preferably incorporates a storage system for sequences of images based on a rack with capacity for removable hard drives.

The monitor of the device is preferably a touch screen.

According to a preferred embodiment of the device, it incorporates a data entry interface (which may be the aforementioned touch screen) for the entry of possible failures which could occur during the driving process and/or during the acquisition of images by the camera, as well as for the introduction of possible parameters to be taken into account for the reliable determination of a moment of completion of the driving process of the pile.

Preferably, the camera and the sensor-illuminator are aligned in one same plane.

Also preferably, the device is configured to obtain three-dimensional images of the surface of the pile.

The images obtained preferably have a resolution such that it enables the fissures, cracks, deterioration and deviations to be detected in the driven pile, with regard to an initially foreseen situation.

As already mentioned, the present invention also relates to a method for the optical verification of pile-driving.

The method for the optical verification of pile-driving comprises:
- fastening a contrast strip to the surface of a pile;
- arranging a point of reference fastened to the terrain (in a fixed position with regard to the terrain; preferably, the point of reference is fixed to the articulated arm, which in turn is fastened with regard to the inertial system of the supporting structure, which in turn is located in a fixed position with regard to the terrain);
- projecting, by means of a sensor-illuminator, a laser illumination pattern on the surface of the pile, such that said illumination pattern passes through the contrast strip and through the point of reference, projecting said point of reference on the surface of the pile;
- capturing, by means of a camera, a sequence of images of the pile, in the driving process thereof on the terrain;
- measuring, by means of the sensor-illuminator, the distance between the sensor-illuminator and the contrast strip and the distance between the sensor-illuminator and the projection of the point of reference on the surface of the pile;
- determining, starting from the measurements taken by the sensor-illuminator, a horizontal distance "X" between the sensor-illuminator and the pile (this horizontal distance "X" may coincide with the value of the distance from the sensor-illuminator to the projection of the point of reference illuminated by the laser light on the surface of the pile, as long as the sensor-illuminator and the point of reference are positioned on the same horizontal plane);
- calculating, starting from the measurements taken by the sensor-illuminator, and from the images captured by the camera, an actual distance between the contrast strip and the projection of the point of reference on the surface of the pile. This actual distance on the pile between the contrast strip and the projection of the point of reference on the surface of the pile can be calculated starting from a distance between the contrast strip and the point of reference measured on the images of the pile, between the contrast strip and the point of reference.

Preferably, the method of the invention comprises issuing a warning indicating the completion of the driving process of the pile, when it is detected that the "rejection" occurs in the driving process.

In the device object of the present invention, the sensor and the camera used are based on computer vision and on laser technology. The contrast strip adhered to the surface of the pile to be driven and a point of reference which remains fixed with the sensor by means of an articulated arm are illuminated with the laser and images of both are captured with the camera.

Given the fixed positions of the laser, camera and point of reference, in the acquired image it is possible to determine (in each image or frame), the relative position of the contrast strip with the fixed point of reference with the sensor, that is the distance between the contrast strip and the point of reference , as well as also being able to determine by triangulation the distances from the sensor both to the contrast strip and to the point of reference, both illuminated by the laser. This technique enables, therefore, that from each image it is possible to obtain, on the one hand, the distances to the illuminated points (contrast strip and point of reference), and, on the other hand, on the image obtained in each frame, the distance between said contrast strip and the point of reference can be measured. In this manner, we obtain chromatic data from the image and we can take measurements on each digital image of the inspected element.

### Brief description of the figures

To complement the description that is being made and for the purpose of helping to better understand the features of the invention, the following Figure is attached as an integral part of said description in which the following is depicted in an illustrative and non-limiting manner.

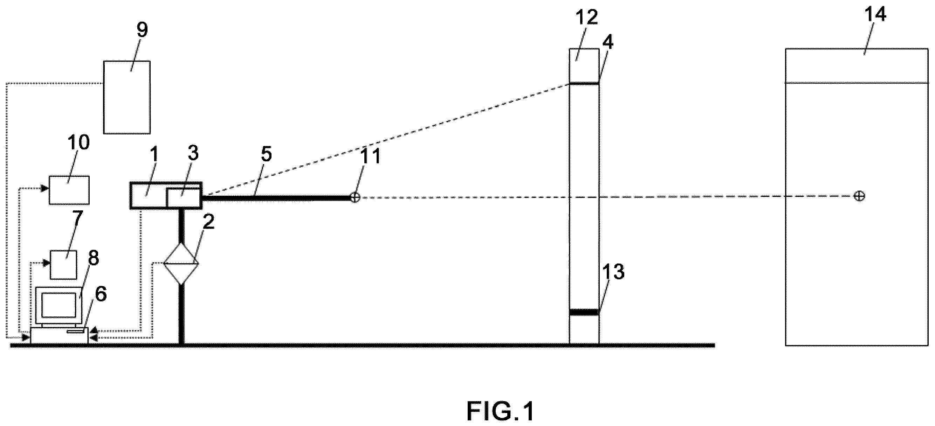

Figure 1 shows a general diagram of the device of the invention wherein the constituent elements thereof can be observed.

### Detailed description

The present invention relates, as already mentioned above, to an optical device for the verification of pile-driving (12).

It is envisaged that in the pile there will be a pile joint area (13).

According to a preferred embodiment of the invention, as shown in Figure 1, the device of the invention includes the following elements: a digital vision camera (1), used to perform the automatic verification; an inertial system (2) for eliminating or correcting movements in the measuring equipment, due to the vibrations introduced by the driving; a high-power linear laser sensor-illuminator (3); a contrast strip (4) adhered on the filmed face of the pile (12); an articulated telescopic arm (5) which during the test remains integral with the digital camera (1); at least one set of equipment (6) which includes a processor, hardware and electronics for the control of the acquisition and recording of images, preferably based on several computers installed on a dampened and stabilised industrial rack; a storage system (7) for sequences of images (14) based on a rack with capacity for removable hard drives; a monitor (8) for displaying results of the acquisition and recording of images (14); a power supply system (9) for the installed equipment, and; a driving completion warning system (10), which produces a signal perceptible by the personnel operating the device and/or the driving machine (said signal is preferably acoustic and/or visual).

As for the laser sensor-illuminator (3), it is a high-power linear laser sensor-illuminator associated with the digital camera (1).

As for the camera (1), it is a high-resolution digital camera with high light sensitivity. The camera (1) is used to do the automatic verification of the pile-driving (12). The camera (1) provides images (14), preferably with a minimum rate of 18 frames per second. The acquisition of images (14) by the camera (1) is controlled by a synchronisation signal. The laser sensor-illuminator (3) provides information for obtaining, by means of the camera (1), two types of images (14), namely, intensity images and range images. Intensity images contain information about grey level values. The range images contain information about the distance between the sensor-illuminator (3) and the illuminated surface of the pile (12).

The device comprises a supporting structure, preferably mechanicalhydraulic, for positioning the sensor-illuminator (3) and the camera (1) at the distance from the pile (12) necessary to perform the acquisition of the images (14). This structure incorporates the articulated telescopic arm (5) and the inertial system (2). The supporting structure enables a fixed point of reference (11) with regard to the position of the sensor-illuminator (3) and the camera (1) during the test to be incorporated into the images (14) by means of the arm (5). The supporting structure is capable of supporting the loads, by means of the inertial system (2), with the maximum possible stability such that the vibrations which could affect the acquisition of images (14) are reduced.

The articulated telescopic arm (5) is preferably configured with a sufficiently rigid joint to the inertial system (2), in order to prevent other movements added due to the driving.

Regarding the equipment (6) which includes a processor, hardware and electronics for the control of the acquisition and recording of images (14), this equipment (6) preferably incorporates several computers, pulse counter cards and frame grabbers installed on a damped and stabilised industrial rack. The industrial rack can in turn be installed in the supporting structure, perfectly anchored thereto. A software application is executed on these computers for the acquisition and recording on the hard drive of sequences of images (14), acquired in the work setting.

Regarding the storage system (7) for sequences of images (14), it is preferably a rack with capacity for removable hard drives with sufficient capacity for the storage of a large amount of video data. This system is used for the storage of the information acquired in the work setting. The high-resolution images (14) are stored on uncompressed hard drives, for which reason a very high data transfer speed between memory and hard drive is required.

Regarding the monitor (8), it is preferably a TFT touch screen used to display the images (14) provided by the digital camera (1) and the results during the acquisition and recording on the hard drive of sequences of images (14). In the recording process, indicators of the performance of the acquisition and recording system are shown on the screen, as well as indicators of possible failures which could occur during said process; in other words, in order to obtain the formulations which enable the moment of completion of the driving to be determined, it is foreseen that external parameters which the operator has to introduce must be considered, as well as gathering possible damage and/or incidents which could occur during the process of the driving.

The device of the invention enables the high-performance automatic verification of the driving of precast piles (12). The device is based on image analysis using digital computer vision techniques. By means of the acquisition of high-resolution images (14) of the surface of the pile (12), the contrast strip (4) adhered to the pile (12) and the point of reference (11) integral with the arm (5), illuminated with the laser sensor-illuminator (3), the cracks and deterioration in the pile (12) and the displacements due to the driving between the contrast strip (4) and the point of reference (11) can be detected and analysed.

The device uses a high-speed, high-resolution digital camera (1) together with a high-power laser with linear projection which can be aligned in one same vertical plane. The optical configuration makes it easier to detect displacements, thanks to the information obtained from the inspected surface.

By means of this technique, a known illumination pattern, a vertical line in this case, is projected from a laser onto the object to be inspected (contrast strip (4) adhered to the pile (12)). The digital camera (1) is placed at a fixed distance and at an oblique angle with regard to the projected light. The intersection between the emitted light pattern and the field of view of the digital camera (1) defines the working range of the camera (1); in other words, the laser illuminates the surface to be photographed by the digital camera (1) in a synchronised manner and it is necessary to determine the distance "X" between the sensor-illuminator (3) and the pile (12) so that this is feasible and the entire pile (12) can be recorded in each image (14) or frame depending on the camera chosen, and this being at the maximum possible distance, since in this manner (at the maximum possible distance from the pile (12)) the device will be subjected to less energy than to be damped, introduced by the driving of the pile (12).

The position of the illuminated points on the surface of the object are displayed in the image (14) obtained by the camera (1), being able to calculate trigonometrically (using conventional trigonometric triangulation formulas) the distance from these points to the camera (1).

The process is carried out in a single step, wherein the acquisition and recording of sequences of images of the pile (12) are performed with the contrast strips (4) adhered during the driving process, actively illuminated by the laser sensor-illuminator (3) installed in the device itself. Said sequences of images are stored on hard drives, and are processed on a personal computer. This equipment (6) takes as an input the sequences of recorded images, processes them and, based on the data entered about the terrain wherein the driving takes place and the formulations applicable in each case, analyses the results and determines the moment when the driving process can be terminated.

The aforementioned formulations are elaborated based on the empirical results, obtained in the repeated execution of the test (preferably obtained by means of testing in laboratory prototypes), giving rise to different curves, depending on the type of terrain and other parameters of the driven pile (12), which makes it possible to develop differentiated mathematical models of "terrain-pile" behaviour. These "terrain-pile" mathematical models, applicable in each case, indicate the moment when the "rejection" is reached, moment when the process of driving the pile (12) on the terrain can be terminated.

The device is likewise configured to generate a report containing the data about the terrain entered and the results obtained with regard to the detection of the fissures or cracks, deterioration, deviations or inclinations, or incidents produced in the pile (12) tested during the driving process.

The acquisition by the camera (1) is actuated by means of an external synchronisation signal. A monitor (8) or touch screen is used which performs the functions of an incident keyboard. By means of the incident keyboard, the operator manually enters any additional information of interest, for the subsequent treatment and processing thereof. The processor receives the images from the camera (1) and the information provided by the incident keyboard. All this information is structured and stored on the hard drives of the equipment (6). During the acquisition and recording process, the processor shows the images acquired by the camera (6) on the monitor (8), providing an indicator about the correct operation of the device, as well as a second indicator which shows the actual frequency of recording images on a hard drive.

Due to the conditions wherein the device must operate (close to the driving of the pile (12)), the entire device must be resistant to vibrations and have good thermal and mechanical insulation. For this reason, the acquisition equipment (6), as well as the storage system, are installed on an industrial rack which is damped and stabilised against vibrations. Having the information in 3D facilitates the analysis of the information when detecting deterioration in the surface of the tested element.

The files generated by the processors contain intensity images, with information about the grey level values, and range images, with information about the distance between the sensor-illuminator (3) and the illuminated surface. Both the intensity images and range images can be treated as a database containing three fields "x", "y" and "z".

In the intensity images, the field "x" indicates the horizontal distance of each illuminated point with regard to the device (horizontal longitudinal axis), the field "y" indicates the dimension of each illuminated point in the vertical direction and the field "z" indicates a numerical intensity value of the grey level. This numerical value of the grey intensity enables the contrast strip (4) and the point of reference (11) to be distinguished numerically and with precision from the rest of the surface of the pile (12) in the frames. For the shades of grey, a numerical RGB colour system is preferably used which assigns an intensity value to each pixel.

In the range images, the field "x" indicates the same as in the intensity images, however, the values contained in the field "z" indicate the distance from the sensor-illuminator (3) to the illuminated point. In the attached Figure, two distances designated are shown. The distance from the sensor-illuminator (3) to the projection of the point of reference (11) on the pile (12). The distance from the sensor-illuminator (3) to the contrast strip (4). The distance from the sensor-illuminator (3) to the contrast strip (4) fastened to the surface of the pile (12) is entered as the value of the field "z" in the range images.

The distance from the sensor-illuminator (3) to the projection of the point of reference (11) illuminated by the laser light on the surface of the pile (12)can be corrected by means of the cosine of the angle ω between the horizontal and the segment joining the sensor-illuminator (3) and the point of reference (11). In this manner, the horizontal distance "X" between the sensor-illuminator (3) and the pile (12) can be calculated. The vertical coordinate of the distance between the contrast strip and the point of reference can be obtained by measuring, on each frame, the distance between the illuminated contrast strip (4) and the illuminated point of reference (11). This value of the distance between the contrast strip (4) and the point of reference (11) thus obtained can be contrasted with the value calculated by trigonometry of the actual distance , on the pile (12), between the illuminated contrast strip (4) and the illuminated point of reference (11).

According to a particular embodiment (as shown in Figure 1), the sensor-illuminator (3) is located in one same horizontal plane with the point of reference (11) (in other words, the angle ω is equal to zero). In this manner, the distance from the sensor-illuminator (3) to the projection of the point of reference (11) illuminated by the laser light on the surface of the pile (12) provided by the sensor is directly the distance "X" between the sensor-illuminator (3) (and the camera (1)) and the pile (12). In this case, the distance between the contrast strip (4) and the point of reference (11) measured on the image (14) coincides with the actual distance on the pile (12) between the contrast strip (4) and the projection of the point of reference (11) on the surface of the pile (12), simply by applying the corresponding scale change in the image (14).

Furthermore, the files generated during the acquisition contain the additional information provided by the operator from the incident keyboard. Starting from all this information, the processing of the images (14) contained in the sequences is performed in order to, on the one hand, carry out the search for inclination or deviation with regard to the axis defined in the driving and, on the other, determine the relative positioning of the contrast strip (4) with regard to the point of reference (11) integral with the arm (5) of the device, in order to evaluate the advance of the driving.

According to a possible embodiment, the range images have a resolution of 1 millimetre in the horizontal direction (field "x") and vertical direction (field "y") and 0.5 millimetres in the radial distance (field "z"). The analysis of the geometry is the last step performed in the processing of the range images and from it the values of the displacements in the radial direction of the pile (12) are obtained.

The scope of protection of the current invention is defined by the appended claims.

## Claims

1. An optical device for the verification of pile-driving **characterised in that** it comprises:
- a supporting structure, comprising an inertial system (2) configured to eliminate and/or correct movements of the terrain due to the driving process of a pile (12), where the supporting structure comprises:
∘ a camera (1), configured to capture images (14) of the surface of the pile (12);
∘ an articulated arm (5), which in turn comprises a point of reference (11);
∘ a sensor-illuminator (3), configured to illuminate the surface of the pile (12) and the point of reference (11) by means of a laser illumination pattern, likewise to measure:
▪ a distance from said sensor-illuminator (3) to a contrast strip (4) adhered to the surface of the pile (12), and;
▪ a distance from the sensor-illuminator (3) to the projection of the point of reference (11) illuminated by the laser light on the surface of the pile (12);
- equipment (6) for the processing of the images (14) captured by the camera (1) and of the distances measured by the sensor-illuminator (3); and
- a monitor (8), configured to display the processed images (14), captured by the camera (1), containing the information about the distances measured by the sensor-illuminator (3);
where the processing equipment (6) is configured so as to measure, on each image (14) captured by the camera (1), a distance between the contrast strip (4) and the point of reference (11) and to calculate the actual distance on the pile (12) between the contrast strip (4) and the projection of the point of reference (11) on the surface of the pile (12).

2. The optical device for the verification of pile-driving according to claim 1, **characterised in that** it comprises a driving completion warning system (10), configured to emit a signal identifying the completion of the driving process of the pile (12).

3. The optical device for the verification of pile-driving according to claim 2, **characterised in that** the warning system (10) is configured to emit an acoustic and/or visual signal.

4. The optical device for the verification of pile-driving according to any of the preceding claims, **characterised in that** the processing equipment (6) is configured to produce two types of images by means of the combination of the images (14) captured by the camera (1) and the distances measured by the sensor-illuminator (3), namely:
- intensity images, where each intensity image contains an image of the pile (12), and wherein each intensity image has associated information in three fields, X, Y, Z, where:
∘ the field X has an associated horizontal distance from the sensor-illuminator (3) to the pile (12);
∘ the field Y has an associated vertical distance from each point corresponding to the contrast strip (4) to the point of reference (11), and;
∘ the field Z has an associated intensity level, in grey scale, where the contrast strip (4) and the point of reference (11) comprise a light reflection spectrum different from the rest of the illuminated surface of the pile (12);
- range images, where each range image contains an image of the pile (12), and wherein each range image has associated information in three fields, X, Y, Z, where:
∘ the field X has an associated horizontal distance from the sensor-illuminator (3) to the pile (12);
∘ the field Y has an associated vertical distance, corresponding to the actual distance on the pile (12) between the contrast strip (4) and the projection of the point of reference (11) on the surface of the pile (12), and;
∘ the field Z has the associated distance from the sensor-illuminator (3) to the contrast strip (4).

5. The optical device for the verification of pile-driving according to any of the preceding claims, **characterised in that** the illumination pattern emitted by the sensor-illuminator (3) is a vertical line located between the contrast strip (4) and the point of reference (11).

6. The optical device for the verification of pile-driving according to any of the preceding claims, **characterised in that** the processing equipment (6) is installed on a rack which is damped and stabilised against possible vibrations of the terrain.

7. The optical device for the verification of pile-driving according to any of the preceding claims, **characterised in that** it comprises a storage system (7) for sequences of images (14) based on a rack with capacity for removable hard drives.

8. The optical device for the verification of pile-driving according to any of the preceding claims, **characterised in that** the monitor (8) is a touch screen.

9. The optical device for the verification of pile-driving according to any of the preceding claims, **characterised in that** it includes a data entry interface.

10. The optical device for the verification of pile-driving according to any of the preceding claims, **characterised in that** the camera (1) and the sensor-illuminator (3) are aligned in one same plane.

11. The optical device for the verification of pile-driving according to any of the preceding claims, **characterised in that** the articulated arm (5) is extendable.

12. A method for the optical verification of pile-driving, **characterised in that** it comprises:
- fastening a contrast strip (4) to the surface of a pile (12);
- arranging a point of reference (11) fastened to the terrain;
- projecting, by means of a sensor-illuminator (3), a laser illumination pattern on the surface of the pile (12), such that said illumination pattern passes through the contrast strip (4) and through the point of reference (11), projecting said point of reference (11) on the surface of the pile (12);
- capturing, by means of a camera (1), a sequence of images (14) of the pile (12), in the driving process thereof on the terrain;
- measuring, by means of the sensor-illuminator (3), the distance between the sensor-illuminator (3) and the contrast strip (4) and the distance between the sensor-illuminator (3) and the projection of the point of reference (11) on the surface of the pile (12);
- determining, starting from the measurements taken by the sensor-illuminator (3), a horizontal distance, X, between the sensor-illuminator (3) and the pile (12);
- calculating, starting from the measurements taken by the sensor-illuminator (3), and from the images (14) captured by the camera (1), an actual distance between the contrast strip (4) and the projection of the point of reference (11) on the surface of the pile (12).

13. The method for the optical verification of pile-driving according to claim 12, **characterised in that** it comprises issuing a warning indicating the completion of the driving process of the pile (12) when it is detected that the rejection occurs in the driving process.

## Patentansprüche

1. Optische Vorrichtung zur Verifizierung von Rammarbeiten, **dadurch gekennzeichnet, dass** sie Folgendes umfasst:
- eine Stützstruktur, umfassend ein Trägheitssystem (2), das konfiguriert ist, Bewegungen des Geländes aufgrund des Rammprozesses eines Pfahls (12) zu beseitigen und/oder zu korrigieren, wobei die Stützstruktur Folgendes umfasst:
- eine Kamera (1), die konfiguriert ist, Bilder (14) der Oberfläche des Pfahls (12) zu erfassen;
- einen Gelenkarm (5), der wiederum einen Bezugspunkt (11) umfasst;
- eine Sensor-Beleuchtungseinrichtung (3), die konfiguriert ist, die Oberfläche des Pfahls (12) und den Bezugspunkt (11) mittels eines Laserbeleuchtungsmusters zu beleuchten, ebenfalls um Folgendes zu messen:
- einen Abstand von der Sensor-Beleuchtungseinrichtung (3) zu einem Kontraststreifen (4), der an der Oberfläche des Pfahls (12) angebracht ist, und;
- einen Abstand von der Sensor-Beleuchtungseinrichtung (3) zu der Projektion des Bezugspunkts (11), der von dem Laserlicht an der Oberfläche des Pfahls (12) beleuchtet wird;
- eine Einrichtung (6) zum Verarbeiten der von der Kamera (1) erfassten Bilder (14) und der von der Sensor-Beleuchtungseinrichtung (3) gemessenen Abstände; und
- einen Monitor (8), der konfiguriert ist, die verarbeiteten Bilder (14) anzuzeigen, die von der Kamera (1) erfasst wurden und die Informationen über die durch die Sensor-Beleuchtungseinrichtung (3) gemessenen Entfernungen enthalten;
wobei die Verarbeitungseinrichtung (6) so konfiguriert ist, dass sie an jedem von der Kamera (1) aufgenommenen Bild (14) einen Abstand zwischen dem Kontraststreifen (4) und dem Bezugspunkt (11) misst und den tatsächlichen Abstand am Pfahl (12) zwischen dem Kontraststreifen (4) und der Projektion des Bezugspunkts (11) auf die Oberfläche des Pfahls (12) berechnet.

2. Optische Vorrichtung zum Verifizieren von Rammarbeiten nach Anspruch 1, **dadurch gekennzeichnet, dass** sie ein Rammabschluss-Warnsystem (10) umfasst, das konfiguriert ist, ein Signal zu emittieren, das den Abschluss des Rammvorgangs am Pfahl (12) identifiziert.

3. Optische Vorrichtung zur Überprüfung von Rammarbeiten nach Anspruch 2, **dadurch gekennzeichnet, dass** das Warnsystem (10) so konfiguriert ist, dass es ein akustisches und/oder visuelles Signal aussendet.

4. Optische Vorrichtung zum Verifizieren von Rammarbeiten nach einem der vorhergehenden Ansprüche, **dadurch gekennzeichnet, dass** die Verarbeitungseinrichtung (6) konfiguriert ist, zwei Arten von Bildern mittels der Kombination der von der Kamera (1) erfassten Bilder (14) und der von der Sensor-Beleuchtungseinrichtung (3) gemessenen Abstände zu erzeugen, nämlich:
- Intensitätsbilder, wobei jedes Intensitätsbild ein Bild des Pfahls (12) enthält und wobei jedem Intensitätsbild Informationen in drei Feldern X, Y, Z zugeordnet sind, wobei gilt:
- das Feld X weist einen zugeordneten horizontalen Abstand von der Sensor-Beleuchtungseinrichtung (3) zu dem Pfahl (12) auf;
- das Feld Y weist einen zugeordneten vertikalen Abstand von jedem Punkt, der dem Kontraststreifen (4) entspricht, zu dem Bezugspunkt (11) auf, und
- das Feld Z weist ein zugeordnetes Intensitätsniveau in Grauskala auf, wobei der Kontraststreifen (4) und der Bezugspunkt (11) ein Lichtreflexionsspektrum umfassen, das sich von dem Rest der beleuchteten Oberfläche des Pfahls (12) unterscheidet;
- Bereichsbilder, wobei jedes Bereichsbild ein Bild des Pfahls (12) enthält und wobei jedem Bereichsbild Informationen in drei Feldern X, Y, Z zugeordnet sind, wobei gilt:
- das Feld X weist einen zugeordneten horizontalen Abstand von der Sensor-Beleuchtungseinrichtung (3) zu dem Pfahl (12) auf;
- das Feld Y weist einen zugeordneten vertikalen Abstand auf, der dem tatsächlichen Abstand am Pfahl (12) zwischen dem Kontraststreifen (4) und der Projektion des Bezugspunkts (11) auf die Oberfläche des Pfahls (12) entspricht, und
- das Feld Z weist den zugehörigen Abstand von der Sensor-Beleuchtungseinrichtung (3) zu dem Kontraststreifen (4) auf.

5. Optische Vorrichtung zur Überprüfung der Rammarbeiten nach einem der vorhergehenden Ansprüche, **dadurch gekennzeichnet, dass** das von der Sensor-Beleuchtungseinrichtung (3) emittierte Beleuchtungsmuster eine vertikale Linie ist, die zwischen dem Kontraststreifen (4) und dem Bezugspunkt (11) angeordnet ist.

6. Optische Vorrichtung zur Überprüfung der Rammarbeiten nach einem der vorhergehenden Ansprüche, **dadurch gekennzeichnet, dass** die Verarbeitungseinrichtung (6) auf einem Gestell installiert ist, das gegen mögliche Schwingungen des Geländes gedämpft und stabilisiert ist.

7. Optische Vorrichtung zur Überprüfung der Rammarbeiten nach einem der vorhergehenden Ansprüche, **dadurch gekennzeichnet, dass** sie ein Speichersystem (7) für Bildsequenzen (14) umfasst, das auf einem Gestell mit einer Kapazität für herausnehmbare Festplatten basiert.

8. Optische Vorrichtung zur Überprüfung der Rammarbeiten nach einem der vorhergehenden Ansprüche, **dadurch gekennzeichnet, dass** der Monitor (8) ein Touchscreen ist.

9. Optische Vorrichtung zum Verifizieren von Rammarbeiten nach einem der vorhergehenden Ansprüche, **dadurch gekennzeichnet, dass** sie eine Dateneingabeschnittstelle umfasst.

10. Optische Vorrichtung zur Überprüfung von Rammarbeiten nach einem der vorhergehenden Ansprüche, **dadurch gekennzeichnet, dass** die Kamera (1) und die Sensor-Beleuchtungseinrichtung (3) in einer gleichen Ebene ausgerichtet sind.

11. Optische Vorrichtung zur Überprüfung von Rammarbeiten nach einem der vorhergehenden Ansprüche, **dadurch gekennzeichnet, dass** der Gelenkarm (5) ausfahrbar ist.

12. Verfahren zur optischen Verifizierung von Rammarbeiten, **dadurch gekennzeichnet, dass** es Folgendes umfasst:
- Befestigen eines Kontraststreifens (4) an der Oberfläche eines Pfahls (12);
- Anordnen eines Bezugspunkts (11), der auf dem Gelände fixiert ist;
- Projizieren eines Laserbeleuchtungsmusters auf die Oberfläche des Pfahls (12) mittels einer Sensor-Beleuchtungseinrichtung (3), so dass das Beleuchtungsmuster durch den Kontraststreifen (4) und durch den Bezugspunkt (11) verläuft, Projizieren des Bezugspunkts (11) auf die Oberfläche des Pfahls (12);
- Erfassen einer Sequenz von Bildern (14) des Pfahls (12) bei dessen Rammvorgang auf dem Gelände mittels einer Kamera (1);
- Messen des Abstands zwischen der Sensor-Beleuchtung (3) und dem Kontraststreifen (4) und des Abstands zwischen der Sensor-Beleuchtung (3) und der Projektion des Bezugspunkts (11) auf die Oberfläche des Pfahls (12) mittels der Sensor-Beleuchtungseinrichtung (3);
- Bestimmen, ausgehend von den von der Sensor-Beleuchtungseinrichtung (3) genommenen Messungen, eines horizontalen Abstands X zwischen der Sensor-Beleuchtungseinrichtung (3) und dem Pfahl (12);
- Berechnen eines tatsächlichen Abstands zwischen dem Kontraststreifen (4) und der Projektion des Bezugspunkts (11) auf die Oberfläche des Pfahls (12), ausgehend von den von der Sensor-Beleuchtungseinrichtung (3) aufgenommenen Messungen und den von der Kamera (1) aufgenommenen Bildern (14).

13. Verfahren zur optischen Überprüfung von Rammarbeiten nach Anspruch 12, **dadurch gekennzeichnet, dass** es die Ausgabe einer Warnung umfasst, die den Abschluss des Rammvorgangs am Pfahl (12) anzeigt, wenn erfasst wird, dass es zu einer Rückweisung beim Rammvorgang kommt.

## Revendications

1. Dispositif optique pour la vérification de l'enfoncement de pieux, **caractérisé en ce qu'**il comprend :
- une structure de support, comprenant un système inertiel (2) configuré pour éliminer et/ou corriger les mouvements du terrain dus au processus d'enfoncement d'un pieu (12), la structure de support comprenant :
- une caméra (1), configurée pour capturer des images (14) de la surface de la pile (12) ;
- un bras articulé (5), qui à son tour comprend un point de référence (11) ;
- un capteur-illuminateur (3), configuré pour éclairer la surface de la pile (12) et le point de référence (11) au moyen d'un motif d'éclairage laser, également pour mesurer :
- une distance entre ledit capteur-illuminateur (3) et une bande de contraste (4) collée à la surface de la pile (12), et ;
- une distance entre le capteur-illuminateur (3) et la projection du point de référence (11) éclairé par la lumière laser sur la surface de la pile (12) ;
- un équipement (6) pour le traitement des images (14) capturées par la caméra (1) et des distances mesurées par le capteur-illuminateur (3) ; et
- un moniteur (8), configuré pour afficher les images traitées (14), capturées par la caméra (1), contenant les informations sur les distances mesurées par le capteur-illuminateur (3) ;
l'équipement de traitement (6) étant configuré de manière à mesurer, sur chaque image (14) capturée par la caméra (1), une distance entre la bande de contraste (4) et le point de référence (11) et à calculer la distance réelle sur la pile (12) entre la bande de contraste (4) et la projection du point de référence (11) sur la surface de la pile (12).

2. Dispositif optique pour la vérification de l'enfoncement de pieux selon la revendication 1, **caractérisé en ce qu'**il comprend un système d'avertissement d'achèvement d'enfoncement (10), configuré pour émettre un signal identifiant l'achèvement du processus d'enfoncement du pieu (12).

3. Dispositif optique pour la vérification de l'enfoncement de pieux selon la revendication 2, **caractérisé en ce que** le système d'avertissement (10) est configuré pour émettre un signal acoustique et/ou visuel.

4. Dispositif optique pour la vérification de l'enfoncement de pieux selon l'une quelconque des revendications précédentes, **caractérisé en ce que** l'équipement de traitement (6) est configuré pour produire deux types d'images au moyen de la combinaison des images (14) capturées par la caméra (1) et des distances mesurées par le capteur-illuminateur (3), à savoir :
- des images d'intensité, chaque image d'intensité contenant une image de la pile (12), et chaque image d'intensité ayant des informations associées dans trois champs, X, Y, Z, où :
- le champ X a une distance horizontale associée du capteur-illuminateur (3) à la pile (12) ;
- le champ Y présente une distance verticale associée depuis chaque point correspondant à la bande de contraste (4) jusqu'au point de référence (11), et ;
- le champ Z a un niveau d'intensité associé, en échelle de gris, où la bande de contraste (4) et le point de référence (11) comprennent un spectre de réflexion de la lumière différent du reste de la surface éclairée de la pile (12) ;
- des images d'intervalle, chaque image d'intervalle contenant une image de la pile (12), et chaque image d'intervalle ayant des informations associées dans trois champs, X, Y, Z, où :
- le champ X a une distance horizontale associée du capteur-illuminateur (3) à la pile (12) ;
- le champ Y a une distance verticale associée, correspondant à la distance réelle sur la pile (12) entre la bande de contraste (4) et la projection du point de référence (11) sur la surface de la pile (12), et ;
- le champ Z a la distance associée du capteur-illuminateur (3) à la bande de contraste (4).

5. Dispositif optique pour vérifier l'enfoncement de pieux selon l'une quelconque des revendications précédentes, **caractérisé en ce que** le diagramme d'éclairage émis par le capteur-illuminateur (3) est une ligne verticale située entre la bande de contraste (4) et le point de référence (11).

6. Dispositif optique pour la vérification de l'enfoncement de pieux selon l'une quelconque des revendications précédentes, **caractérisé en ce que** l'équipement de traitement (6) est installé sur une crémaillère qui est amortie et stabilisée contre d'éventuelles vibrations du terrain.

7. Dispositif optique pour la vérification de l'enfoncement de pieux selon l'une des revendications précédentes, **caractérisé en ce qu'**il comprend un système de stockage (7) pour des séquences d'images (14) sur la base d'une baie ayant une capacité pour des disques durs amovibles.

8. Dispositif optique pour la vérification de l'enfoncement de pieux selon l'une quelconque des revendications précédentes, **caractérisé en ce que** le moniteur (8) est un écran tactile.

9. Dispositif optique pour la vérification de l'enfoncement de pieux selon l'une quelconque des revendications précédentes, **caractérisé en ce qu'**il comprend une interface d'entrée de données.

10. Dispositif optique pour la vérification de l'enfoncement de pieux selon l'une quelconque des revendications précédentes, **caractérisé en ce que** la caméra (1) et l'illuminateur de capteur (3) sont alignés dans un même plan.

11. Dispositif optique pour la vérification de l'enfoncement de pieux selon l'une quelconque des revendications précédentes, **caractérisé en ce que** le bras articulé (5) est extensible.

12. Procédé pour la vérification optique du battage de pieux, **caractérisé en ce qu'**il comprend :
- la fixation d'une bande de contraste (4) à la surface d'un pieu (12)
- disposer un point de référence (11) fixé au terrain ;
- projeter, au moyen d'un capteur-illuminateur (3), un motif d'éclairage laser sur la surface de la pile (12), de telle sorte que ledit motif d'éclairage passe à travers la bande de contraste (4) et à travers le point de référence (11), projetant ledit point de référence (11) sur la surface de la pile (12) ;
- capturer, au moyen d'une caméra (1), une séquence d'images (14) de la pile (12), dans le processus d'entraînement de celle-ci sur le terrain ;
- mesurer, au moyen du capteur-illuminateur (3), la distance entre le capteur-illuminateur (3) et la bande de contraste (4) et la distance entre le capteur-illuminateur (3) et la projection du point de référence (11) sur la surface de la pile (12) ;
- la détermination, à partir des mesures effectuées par le capteur-éclairage (3), d'une distance horizontale, X, entre le capteur-éclairage (3) et la pile (12) ;
- calculer, à partir des mesures effectuées par le capteur-illuminateur (3), et à partir des images (14) capturées par la caméra (1), une distance réelle entre la bande de contraste (4) et la projection du point de référence (11) sur la surface de la pile (12).

13. Procédé de vérification optique de l'enfoncement de pieux selon la revendication 12, **caractérisé en ce qu'**il comprend l'émission d'un avertissement indiquant l'achèvement du processus d'enfoncement du pieu (12) lorsqu'il est détecté que le rejet se produit dans le processus d'enfoncement.
